# EUROPEAN PATENT APPLICATION

(11) **EP 2 708 736 A2**
(43) Date of publication of application: **19.03.2014**
(21) Application number: 13177809.4
(22) Date of filing: 24.07.2013
(51) Int. Cl.: F03D 1/06

(54) **Load and noise mitigation system for wind turbine blades**

(30) Priority: 12.09.2012 US 201213611314
(71) Applicant: Siemens Aktiengesellschaft, 80333 München (DE)
(72) Inventor: Asheim, Michael, Golden, 80401 (US); Mayda, Edward A., Thornton, 80602 (US); Singh, Manjinder J., Broomfield, 80020 (US)

(57) **Abstract**

A load and noise mitigation system (40) for attachment to a wind turbine blade (20). The system (40) includes a flex member (42) for attachment adjacent the trailing edge (28) of the blade (20) and a noise reduction member (44) associated with the flex member (42). At least a portion of the flex member (42) is configured to deform and change in orientation from a first position (58) to a second activated position (60) in the presence of an air pressure force on at least a portion of the flex member (42).

## Description

### FIELD OF THE INVENTION

The present invention relates to wind turbines, and more particularly to a load and noise mitigation system for wind turbine blades.

### BACKGROUND OF THE INVENTION

Wind turbines are known in the art for transforming wind energy into electrical energy. One significant issue associated with wind turbines is the amount of noise generated during operation. Noise is generated when turbulent structures (e.g., random disturbances) in the wind travel over the wind turbine blade airfoil and interact with the trailing edge thereof. This phenomenon is generally recognized as one of the main sources of noise emanating from wind turbines. Further, the increased pressure differences between a pressure and a suction side of the wind turbine blade may lead to the generation of low frequency flow structures that can also lead to higher noise levels.

The attachment of a trailing edge brush comprising a plurality of bristles has been developed as a solution to wind turbine noise. US Published Patent Application Nos. 20080166241 and 20070077150, for example, disclose a trailing edge brush comprising a plurality of bristles that are attached to the corresponding blade body in the vicinity of the trailing edge. Typically, one end of the bristles is attached to the trailing edge, protruding away from the blade body. Similarly, serrated panels attachable to trailing edges of the blades have also been used as a solution to wind turbine noise. The panels each include a plurality of spaced apart, saw tooth-like teeth having a predetermined size and shape. By way of example, the Sandia Report, SAND2011-5252 (August 2011), entitled "Survey of Techniques for Reduction of Wind Turbine Blade Trailing Edge Noise" by Barone, describes that the mechanism for noise reduction utilizing the above-described trailing edge brushes is to generate a more gradual change in impedance over the brush extension so as to avoid a sudden impedance mismatch at the trailing edge. An alternative explanation is that the porous nature of the brushes dampens turbulent fluctuations in the boundary layer that lead to trailing edge noise. Additionally, the brushes also break up the straight trailing edge, which is very efficient for noise generation, into multiple smaller locations where most of the noise is generated. This breakup of straight trailing edge decreases the noise generated by interaction of the turbulent structures with the trailing edge.

As noted at the end of the Sandia report, however, the effectiveness of trailing edge brushes in reducing noise on large-scale wind turbine blades remains an open question. One reason may be that during high sustained winds or high wind gusts, the pressure gradient across the trailing edge of the airfoil will cause a strong flow from the high pressure side of the airfoil to the suction side. This flow will cause a change in the directions of the streamlines of the local flow around the trailing edge. If a brush or even a serrated panel is included at the trailing edge of the airfoil, then the fibers or serrations would be expected to be conformed by the flow around the trailing edge and would expected to be loaded aerodynamically, especially at the junction between the hard surface of the airfoil and the brush or serrations. In this way, when separation occurs at the trailing edge, a different noise mechanism may dominate the trailing edge noise, over which the brushes and serrations do not have much effect. These phenomena make the noise reduction of the brushes and serrations less effective.

### BRIEF DESCRIPTION OF THE DRAWINGS

The invention is explained in the following description in view of the drawings that show:
FIG. 1 illustrates a wind turbine having three rotor blades, each having a noise and load reduction system comprising a brush mounted thereon in accordance with an aspect of the present invention.
FIG. 2 is a cross-sectional view of a rotor blade of FIG. 1 taken at line 2-2.
FIG. 3 illustrates a cross-sectional view of a rotor blade having a noise and load reduction system with a hinge in accordance with an aspect of the present invention.
FIG. 4 shows the air flow over a typical prior art blade.
FIGS. 5A-5B show the air flow over a prior art blade with a brush and the change in orientation of the brush.
FIGS. 6A-6B show the deformation of a fully flexible flex member and the resulting orientation of an associated brush in accordance with an aspect of the present invention.
FIGS. 7A-7B show the deformation of a partially flexible flex member and the resulting orientation of an associated brush in accordance with an aspect of the present invention.
FIG. 8 is a cross-sectional view of a rotor blade having a noise and load reduction system comprising serrations mounted thereon in accordance with another aspect of the present invention.
FIG. 9 is a top view of a section of a blade having the noise and load reduction system of FIG. 8 mounted thereon.
FIG. 10A-10B show an air flow over a blade having a load and noise mitigation system comprising serrations and the deformation of the flex member in accordance with an aspect of the present invention.

### DETAILED DESCRIPTION OF THE INVENTION

The present inventors have innovatively developed a noise and load mitigation system, which passively mitigates loads on the wind turbine blade while simultaneously optimizing noise reduction. The noise and load mitigation system includes a flex member associated with an edge of a wind turbine blade and a noise reduction structure associated with the flex member. In certain embodiments, the flex member advantageously comprises a deformable connection between the edge and the noise reduction structure. Advantageously, an increased pressure gradient between the suction and pressure side of the blade may cause the flex member to deform and reduce loading before air flow reaches the noise reduction structure. In addition, the deformation of the flex member not only reduces loads on the blade and the noise mitigation structure, but better aligns the noise reduction structure with the natural undisturbed air flow stream direction, which improves the efficiency of the noise reduction structure in reducing trailing edge noise.

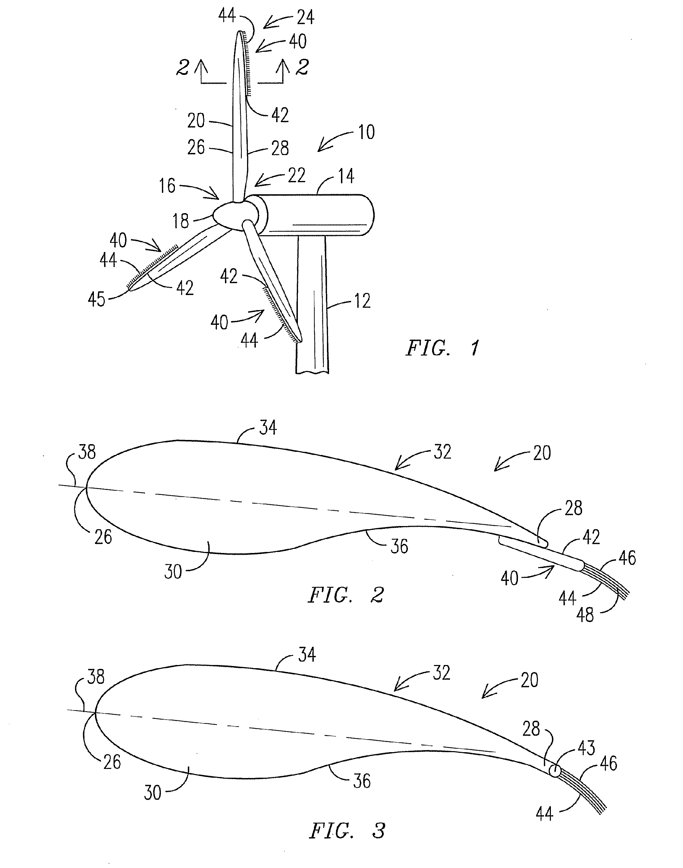

Now referring to the figures, FIG. 1 illustrates a wind turbine 10 having a tower 12, a nacelle 14 mounted on the tower 12, and a rotor 16 having a hub 18 and a plurality of rotor blades 20 thereon. The rotor blade 20 includes a root region 22 and a tip region 24 that defines the outermost part of the blade 20. The rotor blade 20 further includes a leading edge 26 and a trailing edge 28. The rotor blades 20 each comprise thereon a load and noise mitigation system 40 having a flex member 42 and a load mitigation device 44 as described in further detail below. A shell body 30 extends between the leading edge 26 and the trailing edge 28 and forms an airfoil shape in cross-section (airfoil) 32 as shown in FIG. 2 there between. The airfoil 32 comprises a first surface 34 and a second surface 36. The first surface 34 and the second surface 36 are disposed between the leading edge 26 and the trailing edge 28 and define the airfoil 32. Typically, the first surface 34 is referred to as the suction surface of the blade 20 and the second surface 36 is referred to as the pressure surface of the blade 20. The dashed-dotted line extending from the leading edge 26 of the rotor blade 20 to its trailing edge 28 represents the chord line 38 of the rotor blade 20, which extends in a chordwise direction. A spanwise length of the blade 20 extends perpendicularly to the chordwise direction.

Referring again to FIG. 2, there is shown a load and noise reduction system 40 associated with the blade 20 comprising a flex member 42 and a noise mitigation structure 44. The flex member 42 effectively lengthens a chord of the blade 20 when secured thereto. In this way, the flex member 42 will at least increase an amount of lift for the associated blade, which may increase the torque applied to the rotor 16 and output for the wind turbine 10. In certain embodiments, the flex member 42 is configured to flex under loading conditions, such as during high sustained winds and/or high wind gusts, and will maintain its configuration under normal load conditions. Advantageously, the deformation of the flex member 42 is typically achieved passively, although the present invention is not so limited. Alternatively, the deformation of the flex member may be achieved by actively, such as by pneumatic or mechanic structures as are known in the art. Typically, the passive deformation occurs because the pressure difference between the first surface 34 and the second surface 36 is sufficient to cause the deformation (or flexing) of at least a portion of the flex member 42. Advantageously, the deformation reduces the pressure differential between the first surface 34 and the second surface 36, and thereby reduces the forces acting to twist and bend the blade 20. In addition, the deformation of the flex member 42 will improve the efficiency of the noise reduction structure 44 by aligning the noise reduction structure toward and, in some embodiments, in the natural undisturbed air flow stream direction.

The composition of the flex member 42 may be determined by the degree of deformation desired for the particular wind turbine 10. The flex member 42 may range from being partially deformable (at least a rigid portion) to fully deformable, for example. The more flexible or deformable the flex member 42, the greater the expected loading reduction and noise reduction properties; however, a reduced lift contribution will be expected. Exemplary flexible and deformable materials for use with flex member 42 include, but are not limited to, natural and synthetic rubbers, such as isoprene rubber, epichlorohydrin rubber, urethane rubber, silicone rubber, acrylic rubber, acrylonitrol-butadiene-styrene rubber and the like, and blends thereof. In some embodiments, the flex member 42 may be partially rigid and partially deformable, for example, partially deformable at an outer and/or outboard portion of the flex member 42 in a spanwise or chordwise direction. In further embodiments, the flex member 42 may be fully deformable. The flex member 42 may be any suitable thickness to help provide the desired degree of rigidity or deformability to the flex member 42. It is appreciated that the flex member's structure (e.g., material, thickness, length, etc.) may thus be modified to change the stiffness of the flex member 42 so that the desired aerodynamic effects are seen on the flex member 42.

In the embodiment of FIG. 2, the flex member 42 is shown as having an appreciable length and width. It is understood that the present invention is not so limited. As shown in FIG. 3, in other embodiments, the flex member 42 may comprise a hinge 43 having the noise reduction structure 44, e.g. brush 46, secured thereto. In certain embodiments, the hinge 43 may further include a vibrational and/or noise dampening structure associated therewith as is known in the art for reducing any vibrations and/or noise associated with the operation of the hinge 43.

The flex member 42 may be secured to the blade 20 by any suitable structure or method known in the art. For example, the flex member 42 may be secured to the blade 20 by adhesive, fusing, heat sealing, or by mechanical structures, such as nuts and bolts, or the like. Typically, the flex member 42 is secured at or adjacent the trailing edge 28 of the blade. The flex member 42 may also be secured to surface 34 or surface 36 of the blade beginning at a location that is a predetermined chordwise length from the trailing edge 28 of the blade 20. In one embodiment, the predetermined length is 5-30% of a total chordwise length of the blade 20. Typically, the flex member 42 is secured to a portion of the second (pressure) surface 36 of the blade 20 as shown in FIG. 2. In an alternate embodiment, at least a portion of the flex member 42 may be secured to the first (suction) surface 34 of the blade 20. The flex member 42 and noise reduction structure may extend along a desired spanwise length of the blade 20 along the trailing edge. In one embodiment, the flex member 42 and noise reduction structure 44 are disposed in an outboard region of the blade from or adjacent a tip 45 of the blade 20 (shown in FIG. 1) toward an inboard region of the blade 20. In a particular embodiment, the flex member 42 and noise reduction structure 44 are disposed along from 5 to 30 percent of the span in an outboard region of the blade 20.

The noise reduction structure 44 may be any suitable structure known in the art for reducing noise associated with the operation of a wind turbine. In accordance with one aspect, as shown in FIGS. 2-3, the noise reduction structure 44 may comprise a trailing edge brush 46 for reducing noise associated with the wind turbine 10. Typically, the trailing edge brush 46 comprises a plurality of bristles 48. The bristles 48 may be of any suitable length, diameter, and flexibility. In addition, the bristles 48 may have any suitable orientation relative to a trailing edge 28 of the blade 20. The bristles 48 may be secured to the flex member 42 by any suitable structure or method known in the art. In one embodiment, the bristles 48 may be secured to the flex member 42, for example, by the use of an adhesive, fusing, heat sealing, or by mechanical insertion. For example, in one embodiment, the bristles 48 may be inserted into corresponding small apertures in the flex member 42.

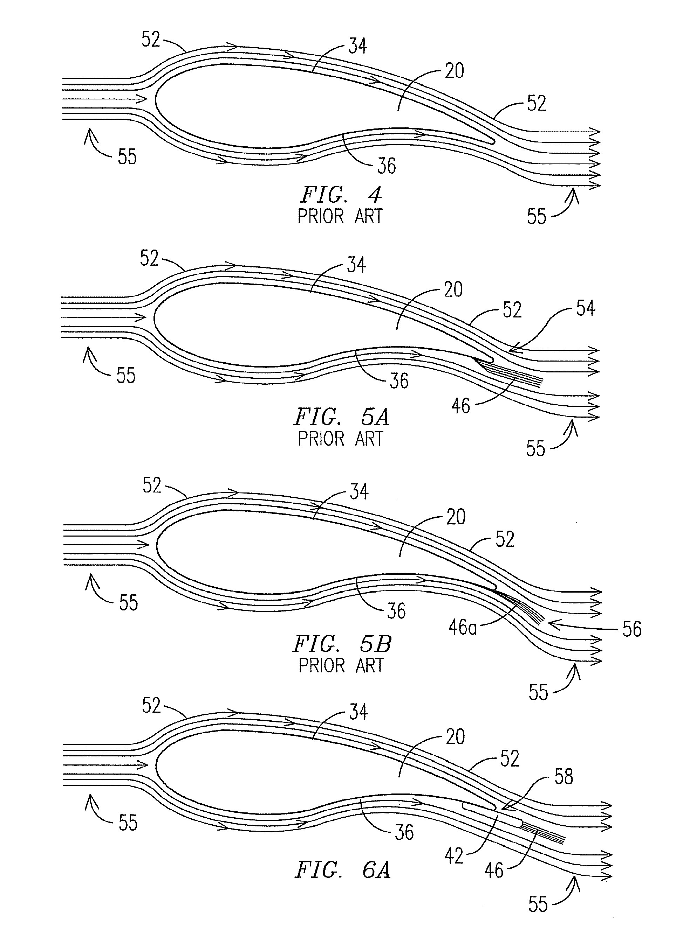

In operation, as shown in FIGS. 4, 5A-5B, 6A-6B, 7A-7B, there are shown streamlines 52 of an air flow over the body of different blades 20. In FIG. 4, there is shown an air flow (in the form of streamlines 52) flowing over the body of a typical wind turbine blade 20. In FIG. 5A-5B, there is shown a prior art configuration of a blade 20 having a brush 46 mounted thereon without a flex member 42. As will be appreciated by one skilled in the art, the streamlines 52 will reorient in the natural undisturbed flowstream direction 55 outboard from the blade surfaces 34, 36. It is appreciated, however, that the brush 46 may be bent from a first position 54 shown in FIG. 5A to a second position 56 shown in FIG. 5B in the presence of an adverse pressure gradient created between the first surface 34 and the second surface 36 of the blade 20. In this way, the brush 46 is not in an optimal position for noise reduction and experiences undesirable loading forces in the presence of an increased pressure gradient.

Advantageously, however, the inclusion of the flex member 42 as shown in the configuration of FIGS. 6A-6B provides a structure to mitigate loading on the trailing edge 28 of the blade 20. Critically also, the flex member 42 does not allow an air pressure force created by the pressure difference or pressure gradient between surfaces 34, 36 to communicate through the brush 46 as in FIGS. 5A-5B as they would if the flex member 42 was not present. Instead, the pressure gradient created between the first surface 34 and the second surface 36 will be reduced by the flex member 42 prior to the brush 46. In one embodiment, the flex member 42 is effective to reduce the pressure gradient by at least 25%. In another embodiment, the flex member 42 is effective to reduce the pressure gradient by at least 50%. In still another embodiment, the flex member 42 is effective to reduce the pressure gradient by at least 75%.

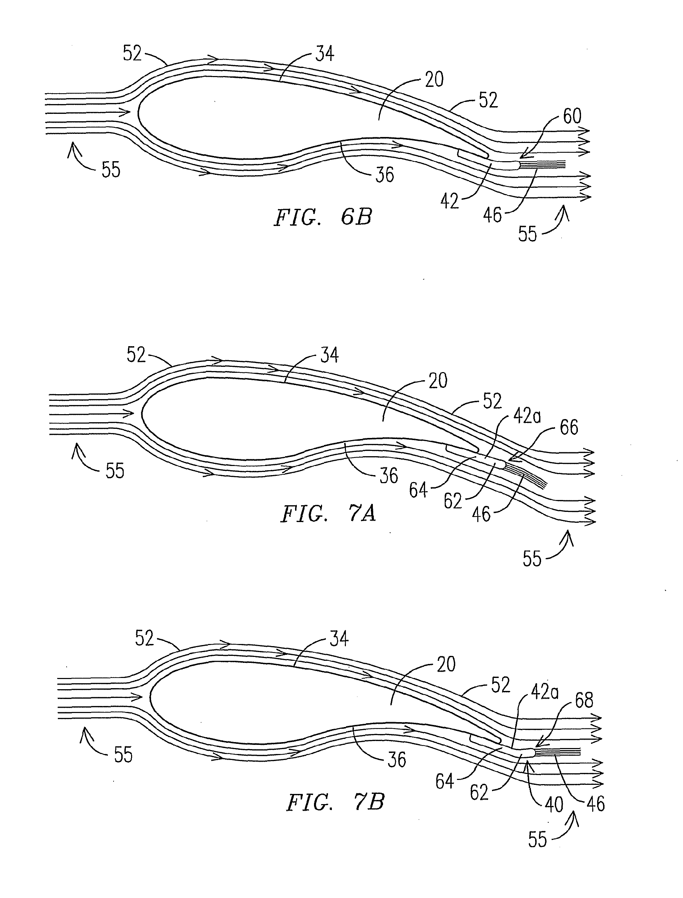

As shown in FIGS. 6A-6B, the flex member 42 is configured to flex and deform from a first (deactivated) position 58 shown in FIG. 6A to a second (activated) position 60 shown in FIG. 6B in the presence of an air pressure force on at least a portion of the flex member 42. Typically, this increased air pressure force is caused by high sustained winds or wind gusts. When the flex member 42 deforms, the brush 46 does not significantly experience the air pressure force, and will thus be more effective at reducing noise. Also, the brush 46 will be better aligned in the natural undisturbed flow direction 55, which will improve the efficiency of the noise reduction structure 44 in reducing trailing edge noise. This reduction in aerodynamic loading on the outboard portion of the blade 20 may also be beneficial for reducing additional loads seen on the turbine 10.

In the embodiments of FIGS. 6A-6B, the flex member 42 of the load and noise mitigation system 40 is shown as being fully flexible. It is appreciated that in other embodiments, the flex member 42a may be only partially flexible in either or both of spanwise direction or chordwise direction. As shown in FIGS. 7A-7B, a flex member 42a is shown having an outboard region 62 that may flex from a first position 66 shown in FIG. 7A to a second position 68 as shown in FIG. 7B in response to high sustained winds or high wind gusts, for example. At the same time, an inboard region 64 of the flex member 42a remains relatively rigid in the second position 68. It is also appreciated that, in this embodiment, the flex member 42a may comprise at least two different materials: one having greater flexibility than the other. Further, in this embodiment, the flex member 42a may provide a greater amount of lift to the associated blade 20 by having a lesser degree of flexibility, but could potentially sacrifice some noise reduction properties, albeit slight in some configurations.

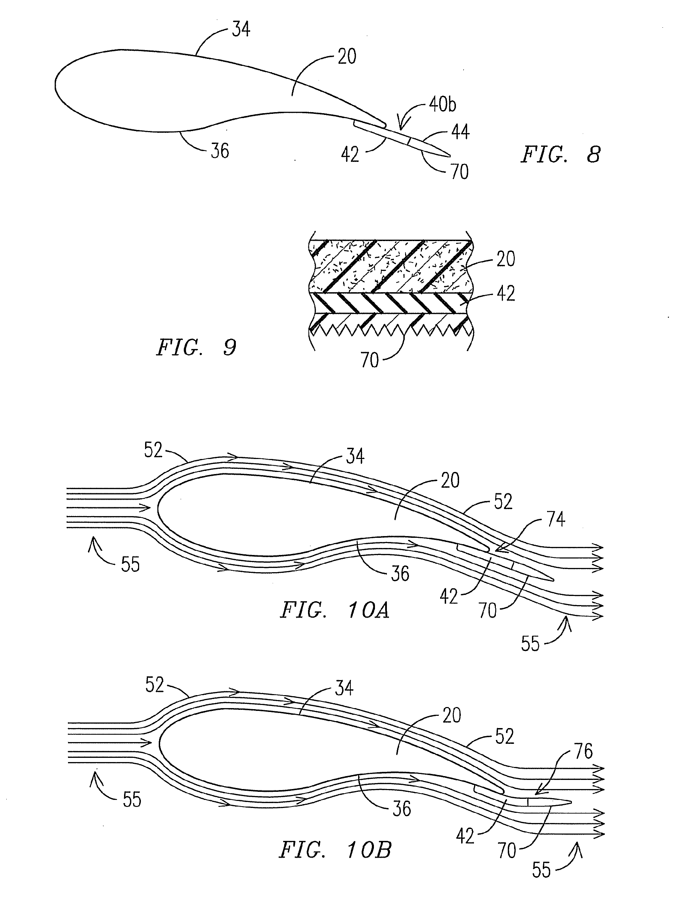

In accordance with another aspect, as shown in FIGS. 8-9, there is shown a load and noise reduction system 40b associated with a blade 20 comprising the flex member 42 and a noise mitigation structure 44. In this instance, the noise mitigation structure 44 comprises a plurality of serrations 70 as are known in the art for reducing an amount of noise associated with the operation of a wind turbine 10. The serrations 70 may be secured to or formed integrally with the flex member 42 as described herein. For example, the serrations 70 may be secured to the flex member 42 by any suitable structure method known in the art, such as by double-side adhesive tape, other adhesive structures, fusing, heat sealing, or by mechanical structures, such as nuts and bolts. In one embodiment, the serrations 70 are provided on a serrated panel as is known in the art. Exemplary serrated panels include those manufactured from a relatively flexible polymeric material, for example, a 2 mm polycarbonate material. In this way, a load and noise reduction system can be provided having a flex member associated with a commercially available serrated panel.

In one embodiment, the serrations 70 are in the form of saw teeth having a predetermined height, length and width, such as a length of 100-1000 mm, width of 50-150 mm, a height of 50-150 mm, and a predetermined angle between adjacent vertices. Also, the serrations 70 may have any desired shape, such as a V-shape or U-shape. Further, the serrations 70 may have a predetermined cross-sectional shape, such as a flat, rectangular, polygonal or rounded cross-section. Even further, the serrations 70 may have any suitable vertex angle, such as 30-60 degrees, for example.

In one embodiment, the serrations 70 may be relatively rigid. In another embodiment, the serrations 70 may be of a material and thickness sufficient to ensure that the serrations 70 flex in response to the speed and angle of the air flow at the trailing edge 28 of the blade 20. In this way, the serrations 70 may also flex to any other position within a range defined by the combination of the stiffness characteristics of the serrations 70 and the range of aerodynamic forces in the operating wind speed range of the wind turbine 10. This means that by proper tuning of the stiffness characteristics of the serrations 70, as well as the flex member 42, the aerodynamic properties of the load and noise mitigation system 40 may be adjusted to the actual wind conditions in a manner that improves the efficiency of the wind turbine 10 and reduces noise. Exemplary structures with serrations 70 for use in the system 40 described herein are disclosed in US Patent No. 7,059,833, the entirety of which is hereby incorporated by reference.

In certain embodiments, the flex member 42 will have a greater degree of flexibility (lower spring constant k) than the serrations 70 so as to allow the flex member to deform to a degree sufficient to place the serrations 70 in better alignment with the air flow leaving the blade while the serrations 70 have a rigidity sufficient to optimally reduce noise. This difference in flexibility may be accomplished by any suitable method such as by utilizing different materials, different thicknesses, different lengths, and the like.

FIGS. 10A-10B show the operation of a load and noise mitigation system 40b comprising a flex member 42 and a noise reduction structure 44, wherein the noise reduction structure 44 comprises serrations 70. The operation is similar to that as described above for embodiments comprising a trailing edge brush 46 as the noise reduction structure 44. During low winds, the flex member does not experience a strong pressure differential between the first surface 34 and the second surface 36. Thus, the carrier member 42 remains essentially undeformed or straight in a first (deactivated) position 74 as shown in FIG. 10A.

As shown in FIGS. 10B, the flex member 42 is configured to flex and deform from the first (deactivated) position 74 shown in FIG. 10A to a second (activated) position 76 shown in FIG. 10B in the presence of an air pressure force on at least a portion of the flex member 42. Typically, this increased air pressure force is caused by high sustained winds or wind gusts. When the flex member 42 deforms, the serrations 70 do not significantly experience the air pressure force, and will thus be more effective at reducing noise. Also, the serrations 70 will be better aligned in the natural undisturbed flow direction 55, which will improve the efficiency of the noise reduction structure 44 in reducing trailing edge noise. This reduction in aerodynamic loading on the aft portion of the blade 20 may also be beneficial for reducing additional loads seen on the turbine 10.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

## Claims

1. A load and noise mitigation system for attachment to a wind turbine blade having a blade body, the load and noise mitigation system comprising:
a flex member for attachment adjacent the trailing edge of the blade body; and
a noise reduction member associated with the flex member;
wherein at least a portion of the flex member is configured to deform and change in orientation from a first deactivated position to a second activated position in the presence of an air pressure force on at least a portion of the flex member; and
wherein the change in orientation of the flex member is effective to reduce a pressure gradient between opposed sides of the blade and simultaneously to orient the noise reduction member toward a natural undisturbed flow stream direction.

2. The load and noise mitigation system of claim 1, wherein the noise reduction member comprises a member from the group consisting of a trailing edge brush and serrations.

3. The load mitigation system of claim 2, wherein the noise reduction member is a trailing edge brush, and wherein the change in orientation is configured to align a majority of bristles of the trailing edge brush in the natural undisturbed flow stream direction.

4. The load and noise mitigation system of claim 1, wherein the noise reduction member comprises a serrated panel.

5. The load and noise mitigation system of claim 1, wherein the flex member is configured to reduce the pressure gradient by at least 25% upon the change in orientation.

6. The load and noise mitigation system of claim 1, wherein the flex member is configured to reduce the pressure gradient by at least 50% upon the change in orientation.

7. The load and noise mitigation system of claim 1, wherein the flex member is configured to reduce the pressure gradient by at least 75% upon the change in orientation.

8. The load and noise mitigation system of claim 1, wherein the flex member comprises a rigid inboard portion in a spanwise direction that is not configured to flex in response to the pressure gradient and an outboard flexible portion in the spanwise direction that is configured to flex in response to the pressure gradient.

9. The load and noise mitigation system of claim 1, wherein the flex member comprises a rigid inner portion in a chordwise direction that is not configured to flex in response to the pressure gradient and an outer flexible portion in a chordwise direction that is configured to flex in response to the pressure gradient.

10. The load and noise mitigation system of claim 1, wherein the flex member comprises a hinge.

11. The load and noise mitigation system of claim 1, wherein the flex member is configured to fully flex in response to the pressure gradient.

12. The load and noise mitigation system of claim 1, wherein the flex member comprises a rubber material.

13. A wind turbine blade comprising the load and noise mitigation system of claim 1.

14. A load and noise mitigation system for attachment to a wind turbine blade having a blade body, the load and noise mitigation system comprising:
a flex member for attachment adjacent a trailing edge of the blade body; and
a trailing edge brush attached to the flex member and comprising a plurality of bristles;
wherein at least a portion of the flex member is configured to deform and change in orientation from a first deactivated position to a second activated position in the presence of an air pressure force on at least a portion of the flex member; and
wherein the change in orientation of the flex member is effective to reduce a pressure gradient between opposed sides of the blade and simultaneously to orient a plurality of the bristles of the brush toward a natural undisturbed flow stream direction.

15. The load and noise mitigation system of claim 14, wherein the flex member is configured to reduce the pressure gradient by at least 25% upon the change in orientation.

16. The load and noise mitigation system of claim 14, wherein the flex member is configured to reduce the pressure gradient by at least 50% upon the change in orientation.

17. The load and noise mitigation system of claim 14, wherein the flex member is configured to reduce the pressure gradient by at least 75% upon the change in orientation.

18. A wind turbine blade comprising the load and noise mitigation system of claim 14.

19. A load and noise mitigation system for attachment to a wind turbine blade having a blade body, the load and noise mitigation system comprising:
a flex member for attachment adjacent a trailing edge of the blade body; and
a plurality of serrations associated with the flex member;
wherein at least a portion of the flex member is configured to deform and change in orientation from a first deactivated position to a second activated position in the presence of an air pressure force on at least a portion of the flex member; and
wherein the change in orientation of the flex member is effective to reduce a pressure gradient between opposed sides of the blade and simultaneously to orient the plurality of the serrations of the brush toward a natural undisturbed flow stream direction.

20. The load and noise mitigation system of claim 19, wherein the flex member exhibits a degree of flexibility greater than a degree of flexibility exhibited by the plurality of serrations.
